# EUROPÄISCHE PATENTANMELDUNG

(11) **EP 0 918 387 A1**
(43) Veröffentlichungstag der Anmeldung: **26.05.1999**
(21) Anmeldenummer: 97119369.3
(22) Anmeldetag: 05.11.1997
(51) Int. Cl.: H02G 15/013, H01R 9/03

(54) **Zwickeldichtung**

(71) Anmelder: PAUL JORDAN ELEKTROTECHNISCHE FABRIK, GmbH & Co., D-12249 Berlin (DE)
(72) Erfinder: Schulz, Barbara, 12051 Berlin (DE)
(74) Vertreter: Alber, Norbert, Dipl.-Ing.

(57) **Zusammenfassung**

Die Erfindung betrifft ein Verfahren sowie eine Vorrichtung zum Abdichten eines sogenannten Zwickels, also des mittigen Freiraumes zwischen etwa parallel verlaufenden Körpern. Aufgabe ist, ein Verfahren und eine Vorrichtung zur Zwickeldichtung zu schaffen, die einfach und kostengünstig herzustellen und auch zu montieren ist, und dennoch eine optimale, langzeitsichere Abdichtung im Zwickel, wenigstens zwischen den einzelnen parallel laufenden Körpern bzw. Adern, und insbesondere auch gegenüber der Umgebung, bietet. Ein erfindungsgemäßes Verfahren zum Abdichten der Außenfläche mehrerer etwa parallel verlaufender Körper, insbesondere der Adern (2) von elektrischen Kabeln, in deren mittigem Freiraum (Zwickel 1) wenigstens gegeneinander, kennzeichnet sich dadurch, daß in den Zwickel (1) eine verformbare Dichtmasse eingebracht wird, Ausdehnungsbegrenzungen für die Dichtmasse in axialer und radialer Richtung angeordnet werden, und wenigstens ein Verdrängerkörper in die Dichtmasse eingebracht wird, um deren dichte Anlage an den Außenflächen der Körper, insbesondere Ader (11), zu bewirken.

## Beschreibung

### I. Anwendungsgebiet

Die Erfindung betrifft ein Verfahren sowie eine Vorrichtung zum Abdichten eines sogenannten Zwickels, also des mittigen Freiraumes zwischen etwa parallel verlaufenden Körpern.

### II. Technischer Hintergrund

Ein typischer Anwendungsfall einer solchen Zwickeldichtung ist die Abdichtung des Freiraumes zwischen den einzelnen Adern eines Kabels in einer Verbindungs- oder Abzweigmuffe der elektrischen Anschlußtechnik. Die Abdichtung des Freiraumes zwischen den einzelnen Adern ist erforderlich, um das Eindringen von Wasser, Schmutz oder ähnlichem zu verhindern. Ein in der Erde verlegtes Kabel kann durch Bauarbeiten o. ä. derart beschädigt werden, daß durch die Kabelisolierung Schmutz und Wasser eindringen können, die Aderisolierungen jedoch unversehrt bleiben und kein Kurzschluß zustande kommt. Dieses als sogenanntes Längswasser im Kabel laufende Wasser kann dann an ganz anderer Stelle, wenn z. B. ein Abzweig angeschlossen werden aoll, Probleme bereiten. Gerade dann, wenn das mehradrige Kabel durchgehend sein soll, also lediglich auf einem Zwischenstück die Kabelisolierung, nicht jedoch die Aderisolierungen, entfernt ist, ist es schwierig, den Zwickel zwischen den in einem geringen Abstand zueinander parallel verlaufenden Adern des Kabels abzudichten.

Eine Abdichtung des Zwickels erfolgt - in Längsrichtung der Kabel betrachtet - entweder an einer Querwand der Muffe, die von den parallel laufenden Adern der Kabel durchlaufen werden muß, oder im Bereich eines Klemmringes, innerhalb dessen die elektrische Verbindung zum Abzweigkabel hergestellt wird.

Dabei ist es bisher bekannt, den Zwickel durch dort eingeschobene Dichtungsteile, die vorzugsweise aus einem elastischen Dichtmittel bestehen, abzudichten, indem diese elastischen Dichtmittel durch den mittels der Muffenquerwand oder des Klemmringes aufgebrachten radialen Druckes komprimiert werden und dabei ausreichend abdichten.

Das Problem liegt jedoch darin, daß einerseits das Einbringen in den Zwickel um so schwieriger ist, je deformierbarer und elastischer der einzubringende Dichtungs-Gegenstand ist, und zum anderen trotz der Deformierbarkeit und Elastizität eine grobe Formanpassung zwischen der Zwickeldichtung und der tatsächlichen Raumform des Zwickels, welche unter anderem von der Außenkontur der Adern und deren Abstand bestimmt wird, gegeben sein muß. Gerade die Außenkontur der Adern kann sich jedoch relativ stark ändern, da die Ursprungsform der Adern durch mechanische Belastungen stark verändert sein kann.

### III. Darstellung der Erfindung

### a) Technische Aufgabe

Es ist daher die Aufgabe gemäß der vorliegenden Erfindung, ein Verfahren und eine Vorrichtung zur Zwickeldichtung zu schaffen, die einfach und kostengünstig herzustellen und auch zu montieren ist, und dennoch eine optimale, langzeitsichere Abdichtung im Zwickel, wenigstens zwischen den einzelnen parallel laufenden Körpern bzw. Adern, und insbesondere auch gegenüber der Umgebung, bietet.

### b) Lösung der Aufgabe

Diese Aufgabe wird durch die kennzeichnenden Merkmale der Ansprüche 1 und 5 gelöst. Vorteilhafte Ausführungsformen ergeben sich aus den Unteransprüchen.

Im folgenden wird anstelle der parallel laufenden, gegeneinander abzudichtenden Körper immer konkret von den Adern eines Kabels gesprochen, ohne die Erfindung hierauf zu beschränken.

Die Abdichtung erfolgt durch das Einbringen einer verformbaren Dichtmasse in den Zwickel. Eine solche Dichtmasse kann entweder ein elastisch verformbarer Dichtungskörper sein, besser jedoch eine plastisch verformbare, pastöse Dichtmasse.

Gerade für letzteren Fall bewirken die axialen und radialen Ausdehnungsbegrenzungen, daß der bei Druckbeaufschlagung der Dichtmasse im Zwickel bewirkte Druck nur zu begrenztem Ausweichen der Dichtmasse axial und radial nach außen führt, und ein Großteil des aufgebrachten Druckes sich in einer festen Anlage der Dichtmasse an den abzudichtenden Flächen im Zwickel, insbesondere den Außenflächen der Adern des Kabels, führt.

Der Druck wird aufgebaut durch Einbringen eines Verdrängerkörpers in die im Zwickelbereich angeordnete Dichtmasse.

Die Handhabung wird dadurch erleichtert, daß die Ausdehnungsbegrenzungen in axialer Richtung zusammen mit der Dichtmasse in den Zwickel eingebracht werden, während die radialen Ausdehnungsbegrenzungen vorzugsweise zusammen mit dem Verdrängerkörper zugeführt werden.

Dadurch ergibt sich eine Vorgehensweise in drei Schritten:
- Einbringen der verformbaren Dichtmasse in den Zwickel,
- Anordnen der Ausdehnungsbegrenzungen für die Dichtmasse in axialer und radialer Richtung, und
- Einbringen eines Verdrängerkörpers in die Dichtmasse, um deren dichte Anlage an den Außenflächen der Adern zu bewirken.

Diese drei Schritte sind keine separaten Arbeitsschritte, da, wie bereits ausgeführt, die Dichtmasse zusammen mit den axialen Ausdehnungsbegrenzungen als ersten Arbeitsschritt eingebracht werden können und die Verdrängerkörper zusammen mit den radialen Ausdehnungsbegrenzungen als zweiter Arbeitsschritt.

Die Dichtmasse wird dabei vorzugsweise nicht lose, sondern innerhalb der axialen Begrenzungsflächen in den Zwickel eingeführt, indem die axialen Begrenzungsflächen in Form von Sternen vorliegen, die aus je zwei, axial beabstandeten Frontplatten gleicher Kontur bestehen, welche durch einen axial verlaufenden Verbindungssteg auf Abstand gehalten und einstückig ausgebildet sind und dazwischen die Dichtmasse aufweisen.

Diese Sterne weisen also eine von der Anzahl der Adern und damit der Zwischenräume zwischen den Adern abhängige Anzahl von sternförmigen Fortsätzen auf, im Falle eines vieradrigen Kabels also vier Fortsätze. Die Sterne sind wesentlich weniger dick, also gemessen in Abstandsrichtung der Frontplatten, als breit, gemessen in Form der geringsten Ausdehnung in der Ebene der Frontplatten der Sterne.

Dadurch ist es möglich, einen Stern radial von außen entlang der Einschubebene zwischen zwei Adern einzuführen, welche eine zwischen den Adern verlaufende Ebene in Längsrichtung ist, indem der Stern mit den Frontplatten parallel zur Einschubebene eingeführt wird. Nachdem der Stern seine gewünschte Radiallage erreicht hat, wird der Stern um 90° um seine Längsachse gedreht, und befindet sich dann mit den Frontplatten quer zur Längsrichtung im Zwickel.

Bei einem Stern mit vier Fortsätzen, also für ein vieradriges Kabel, weist ein solcher Stern zwei gegenüberliegende, lange Fortsätze und zwei hierzu quer liegende, wiederum gegenüberliegende, kurze Fortsätze auf. Beim Einschieben liegen die langen Fortsätze in Einschubrichtung, und die kurzen Fortsätze quer hierzu. Durch die 90°-Drehung nach Erreichen der gewünschten Radiallage, nämlich des Sternes im Zentrum des Zwickels, werden die Frontplatten aufgestellt, so daß die Breite der Fortsätze den wechselseitigen Abstand zwischen den Adern des Kabels bestimmt.

Die Dichtmasse befindet sich innerhalb der Sterne im Freiraum zwischen den Frontplatten, und wird daher beim Einbringen der Sterne automatisch mit in den Zwickel verbracht.

Um beim Einführen die Aderisolierungen nicht zu beschädigen, können die Sterne, insbesondere deren Frontplatten, zusätzlich mit einer elastischen, gummiartigen Beschichtung versehen sein, da die Sterne selbst aus relativ hartem Material, in der Regel hartem Kunststoff, bestehen.

Nach Einbringen eines solchen, z. B. vierarmigen Sternes, ist jedoch nur entlang einer Einschubebene im wesentlichen der gesamte Zwischenraum zwischen je zwei benachbarten Adern mit Dichtmasse ausgefüllt.

Entlang der anderen Einschubebene, in welche vom ersten eingebrachten Stern die kurzen Fortsätze abstehen, ist eine solche, insbesondere vollständige, Verfüllung noch nicht gegeben, da die kurzen Fortsätze nach Drehung des Sternes höchstens bis zur Mitte der an ihr anliegenden Adern radial nach außen ragen.

Infolgedessen wird besser ein, vorzugsweise mehrere, zusätzlicher Stern in Längsrichtung anschließend an den ersten Stern in den Zwickel eingebracht, wobei die einander in Längsrichtung benachbarten Sterne jeweils von einer um 90° von der ersten Einschubrichtung differierenden Richtung aus, also zwischen die nächsten Adern, eingebracht werden.

Bei einem Stern mit vier Fortsätzen liegen damit bei zwei benachbarten Sternen im Zwickel die langen Fortsätze in Richtung der kurzen Fortsätze des benachbarten Sternes und umgekehrt.

Nach dem Einbringen und Drehen um die Längsachse der Sterne werden diese in Längsrichtung so zusammengeschoben, daß sie aneinander anliegen.

Bei einem vieradrigen Kabel werden insbesondere drei Sterne in Längsrichtung hintereinander eingebracht, bei höheren Anforderungen an die Dichtungsstelle wird eine größere Anzahl von Sternen benutzt.

Auf diese Art und Weise ist der Zwischenraum zwischen den Kabeln radial betrachtet vollständig mit Dichtmasse angefüllt, diese liegt dort jedoch drucklos vor, und entfaltet damit gegenüber dem Außenumfang der Adern noch keine zufriedenstellende Dichtwirkung.

Deshalb werden nun Verdrängerstäbe radial von außen in jeden der Sterne, und dabei jeweils in den mit Dichtmasse angefüllten Zwischenraum zwischen den zwei Frontplatten eines Sternes, radial eingebracht.

Um hier den Arbeitsaufwand zu verringern, sind mehrere in Längsrichtung hintereinander für die einzelnen Sterne notwendigen Verdrängerstäbe zu einem Verdrängerkamm zusammengefaßt, wobei der die Verdrängerstäbe in Längsrichtung verbindende Verbindungsbogen in Längsrichtung der Zwickeldichtung betrachtet pilzförmig ausgebildet ist und damit die benachbarten Adern des Kabels übergreift und somit auch als Anschlag beim Vorwärtsschieben zum Zentrum des Zwickels hin dient.

Die Länge der Verdrängerkörper ist so bemessen, daß sich die Spitzen im Zentrum des Zwickels annähernd berühren.

Die Verdrängerkämme umfassen ferner an ihren Enden in Längsrichtung Haltestäbe, die analog zu den Verdrängerstäben geformt sein können, also ebenfalls an ihrem vorderen Ende spitz zulaufend ausgebildet sein können, deren Aufgabe jedoch primär darin besteht, ein Ausweichen des in Längsrichtung jeweils letzten Sternes in Längsrichtung zu verhindern.

Zu diesem Zweck verlaufen die Haltestäbe außerhalb des jeweils letzten Sternes, und der Verdrängerkamm ist hinsichtlich seiner Erstreckung in Längsrichtung sowie der Anzahl der Verdrängerstäbe auf die Anzahl der Sterne abgestellt, welche die Zwickeldichtung umfaßt.

Das Vorwärtsschieben der Verdrängerkämme und Halten in der radial innersten Position erfolgt mit Hilfe der die Zwickeldichtung umgebenden Teile, also entweder von Ober- und Unterschale des Muffengehäuses, wenn die Zwickeldichtung in einer Muffenquerwand angeordnet wird, oder von den beiden Hälften eines Klemmringes, wenn die Anordnung innerhalb eines Klemmringes erfolgt.

### c) Ausführungsbeispiele

Eine Ausführungsform gemäß der Erfindung ist im folgenden anhand der Figuren beispielhaft näher beschrieben. Es zeigen:
- Fig. 1:: einen Stern in der Frontansicht,
- Fig. 2:: den Stern der Fig. 2 in der Seitenansicht,
- Fig. 3:: eine perspektivische Darstellung mehrerer Sterne innerhalb einer Zwickeldichtung,
- Fig. 4:: die räumliche Anordnung eines Verdrängerkammes vor der radialen Zuführung zwischen die Sterne,
- Fig. 5:: einen Querschnitt durch eine fertig montierte Zwickeldichtung, und
- Fig. 6:: einen Längsschnitt durch einen Teil der Zwickeldichtung gemäß Fig. 5.

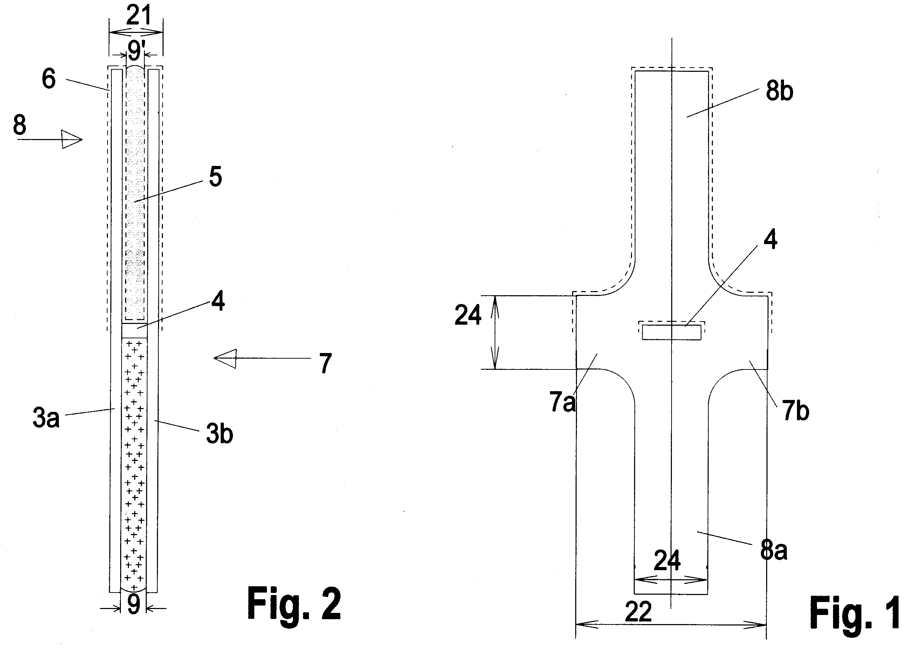

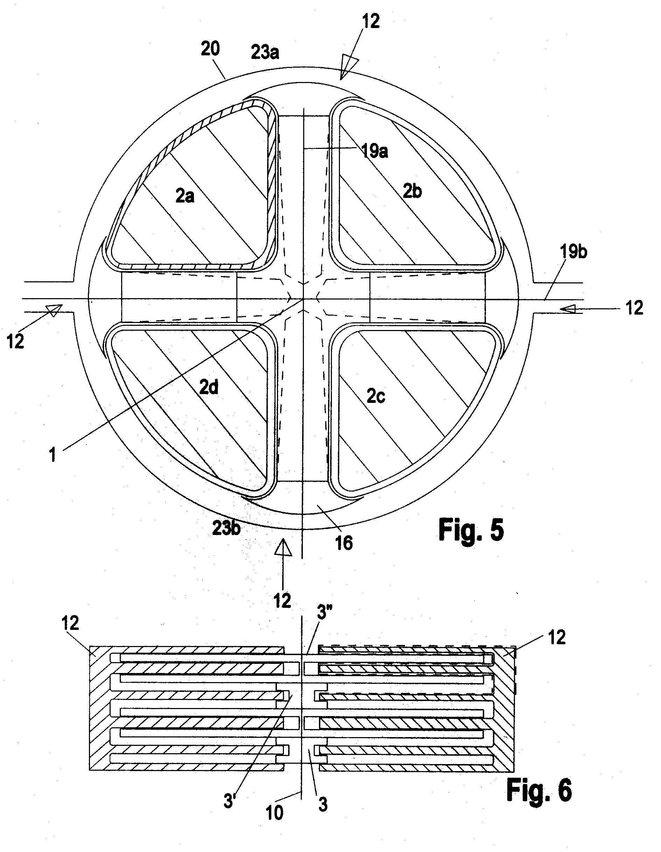

Die Figuren 1 und 2 zeigen einen Stern für ein Kabel mit vier Adern, welche jeweils eine Querschnittsform entsprechend etwa einem Viertelkreis besitzen, und im Abstand zueinander parallel verlaufen, wie am besten anhand der Querschnittsdarstellung der Fig. 5 zu erkennen.

Der Stern der Figuren 1 und 2 verfügt damit entsprechend den vier Zwischenräumen zwischen den Adern über vier Fortsätze, nämlich zwei lange Fortsätze 8a, 8b, die sich gegenüberstehen, sowie zwei kurze Fortsätze 7a, 7b, deren radiale Erstreckung etwa einem Drittel der langen Fortsätze entspricht, und die sich ebenfalls gegenüberstehen und im 90°-Winkel zu den langen Fortsätzen befinden.

Jeder Stern besteht aus zwei im Abstand 9 zueinander befindlichen Frontplatten 3a, 3b, welche über einen vorzugsweise in Richtung der kurzen Fortsätze 7 verlaufenden Verbindungssteg 4, der einstückig zusammen mit den Frontplatten 3a, 3b ausgebildet ist, auf Abstand gehalten werden.

Im Raum zwischen den Frontplatten 3a, 3b befindet sich eine plastisch verformbare Dichtmasse 5.

Da die Frontplatten 3a, 3b sowie der Verbindungssteg 4 aus relativ hartem Kunststoff bestehen, der unter Umständen mit seinen Kanten auch die Aderisolierung beschädigen könnte, können zusätzlich, vor Verfüllung des Freiraumes mit der Dichtmasse, die Platten 3a, 3b - wie in der oberen Hälfte der Fig. 2 dargestellt - mit einer elastischen, gummiartigen Ummantelung 6 versehen sein, die dieses Verletzungsrisiko minimiert. Dadurch verringert sich der Abstand 9 zu einem Abstand 9', in welchem die Füllung 5 aus Dichtmasse eingebracht werden kann.

Die Dichtmasse der Füllung 5 ist ausreichend pastös, um während der Handhabung des Sternes, einschließlich des Einschiebens in den Zwickel, nicht über die Außenkontur der Frontplatten, wie sie in Fig. 1 ersichtlich ist, hinauszufließen.

Zu diesem Zweck ist die Füllung 5 auch mit einer ausreichenden Haftung, insbesondere Eigenhaftung oder separater Verklebung, gegenüber den Frontplatten ausgestattet, und der Abstand 9 ist in Relation zur Fließfähigkeit der Dichtmasse und Breite der Frontplatten ausreichend gering gewählt, um ein Herausfließen seitlich aus dem Stern zu vermeiden.

Ein derartiger Stern wird nun zum Herstellen der Zwickeldichtung - erläutert am Beispiel der Fig. 5, welche die fertige Zwickeldichtung zeigt, - z. B. in der Einschubebene 19b von rechts her, also in Fig. 5 horizontal, zwischen den Adern 2b und 2c eines Kabels eingeschoben, wobei der Stern flach liegt, also die Frontplatten 3a, 3b parallel der Einschubebene 19b liegen, und wobei die langen Fortsätze 8a, 8b in Einschubrichtung weisen.

Nachdem der Stern das Zentrum des Zwickels erreicht hat, so daß also die kurzen Fortsätze 7a, 7b zwischen dem vertikal verlaufenden Abstand der Adern entlang der anderen Einschubebene 19a liegen, wird der Stern 3 hochgedreht, so daß seine Frontplatten in der Bildebene der Fig. 5, also radial zur Längsrichtung, liegen.

Die kurzen Fortsätze 7a, 7b kommen dabei zwischen zwei horizontal benachbarten Adern zu liegen, während die langen Fortsätze 8a, 8b zwischen jeweils zwei vertikal benachbarten Adern der Fig. 5 liegen. Der Abstand der Adern 2b und 2c sowie 2a und 2d entspricht somit der Breite 24 dieser Fortsätze, gemessen in der Ebene der Frontplatten, wobei die Breite der langen und der kurzen Fortsätze die gleiche ist.

Anschließend wird ein weiterer Stern entlang der zweiten Einschubebene 19a, beispielsweise in Fig. 5 von oben her, zwischen den Adern 2a und 2b eingeschoben, sowie vorzugsweise mindestens ein dritter Stern, diesmal wiederum von der Einschubrichtung her um 90° weitergeschaltet, also entlang der Einschubebene 19b, jedoch von der linken Seite her zwischen den Adern 2a und 2d.

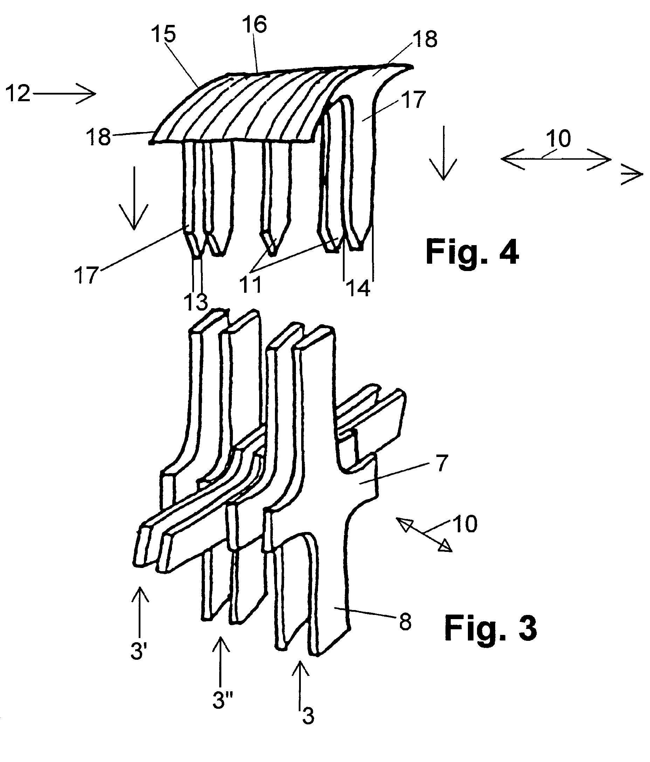

Nach anschließendem Zusammenschieben in Längsrichtung der radial aufgestellten Sterne ergibt sich für die Sterne alleine dargestellt eine Konfiguration, wie perspektivisch, ohne die umgebenden Adern, in Fig. 3 dargestellt:

Die kurzen Fortsätze 7a, 7b der Frontplatte 3a, 3b eines Sternes 3 fluchten mit den langen Fortsätzen 8a, 8b der Frontplatte des benachbarten Sternes 3' und umgekehrt.

Der Zwickel zwischen den Adern ist somit - da mindestens zwei Sterne bei einem vieradrigen Kabel eingebracht wurden - vollständig, also annähernd bis zum Außenumfang der Gesamtanordnung aus den vier Adern - hin mit Dichtmasse angefüllt, wenn auch in axialer Anordnung hintereinander.

Eine Verpressung der Dichtmasse gegen die Außenfläche der Adern erfolgt durch das Einbringen jeweils eines Verdrängerkammes 12, wie er in Fig. 4 einschließlich der Einschubrichtung gegenüber der Sternanordnung dargestellt ist, in jeden Zwischenraum zwischen zwei benachbarte Adern.

Bei der Variante gemäß Fig. 5 mit vier Adern werden also vier Verdrängerkämme 12 radial eingeschoben.

Wie Fig. 4 zeigt, weist ein solcher Verdrängerkamm 12 mehrere hintereinander angeordnete Verdrängerstäbe 11 auf, die jeweils im Inneren eines Sternes Platz finden. Die Verdrängerstäbe 11 sind also schmaler als die Breite 24 eines Sternes, und besitzen eine Dicke 13, die geringer ist als der Abstand 9 bzw. 9' innerhalb eines Sternes, der mit der Füllung 5 angefüllt ist.

Der Abstand in Längsrichtung 10 dieser Verdrängerstäbe 11 ist so gewählt, daß jeder Verdrängerstab 11 in jeweils einen der Sterne radial eingeschoben werden kann. Die Verdrängerstäbe 11 sind in Längsrichtung einstückig zusammen mit einem Verbindungsbogen 16 ausgebildet, der in Längsrichtung betrachtet eine pilzförmige Kontur aufweist, wie am besten in Fig. 5 zu erkennen. Die pilzförmige Kontur ist breiter als die Breite 24 der Sterne 3 und damit auch des Abstandes zwischen zwei benachbarten Adern, so daß dieser Verbindungsbogen 15 mit seinen frei abstehenden Enden die benachbarten Adern etwas überdeckt und als Anschlag für das radiale Nach-Innen-Schieben des Verdrängerkammes 12 dient.

Auf der Außenseite und insbesondere auch auf der Innenseite weist der Verbindungsbogen 15 eine in Umfangsrichtung der Gesamtanordnung verlaufende Riffelung 16 auf, um in Längsrichtung 10 einer dort vorhandenen Dichtungsmasse 20, die gegenüber der Umgebung, z. B. einer Muffenwand, abdichtet, ausreichend Halt zu geben.

An den stirnseitigen Enden des Verbindungsbogens 15 ragen weiterhin - fluchtend und parallel mit den Verdrängerstäben 11 - Haltestäbe 17 vom Verbindungsbogen 15 ab, deren Aufgabe es ist, in Längsrichtung außerhalb des ersten und letzten Sternes diesem eine Ausweichbewegung in axialer Richtung zu verwehren.

Wie ebenfalls in Fig. 5 zu erkennen, ist die Länge der Verdrängerstäbe 11 und/oder der Haltestäbe 17 so gewählt, daß sich diese im Zentrum des Zwickels nicht berühren.

Die vier Verdrängerkämme der Fig. 5 werden in der Regel von Hand angesetzt, jedoch nicht von Hand bis in ihre Endlage radial vorwärts geschoben. Dies geschieht mit Hilfe der radial von außen anliegenden Ober- und Unterschale 23a, 23b einer Muffe 23, welche gegeneinander verschraubt werden. Damit auch die auf der Berührungsebene zwischen Oberschale und Unterschale 23a, 23b verlaufenden Verdrängerkämme 12 radial nach innen gedrückt werden, ist die Außenkontur des Verbindungsbogens 15 bogenförmig oder schräg zur Mitte hin ansteigend geformt, mit einem Krümmungsradius, der geringer ist als der Krümmungsradius der Gesamtanordnung der Adern, also beispielsweise der Krümmungsradius der Innenkontur der Oberschale 23a bzw. der Unterschale 23b der Muffe.

Zusätzlich wird - für die Abdichtung zwischen den Adern und der Umgebung - um die Gesamtanordnung herum, also außen auf die Außenfläche der Adern sowie die Außenfläche der Verbindungsbögen 15 der Verdrängerkämme 12 herum, - Dichtmasse 20 vorgesehen, gegen welche dann die Muffe mit ihrer Innenkontur preßt.

Fig. 6 zeigt im Längsschnitt durch die Zwickeldichtung der Fig. 5 entlang der Einschubebene 19a in weiterer Ausgestaltung die Möglichkeit, daß auch die Verdrängerstäbe des Verdrängerkammes 12 mit einem elastischen Überzug 6' aus gummiähnlichem Material ausgestattet sein können, und einschließlich des Überzuges eine geringfügig größere Dicke als der Abstand 9 bzw. 9' innerhalb eines Sternes aufweisen können.

Allein dadurch erfolgt bereits eine dichte Anlage der Frontplatten 3a, 3b der Sterne 3, 3', 3'' gegenüber dem eingeschobenen Dichtungsstab 11, so daß Ausweichmöglichkeiten für die im Zwickel angeordnete Dichtmasse der Füllung 5 kaum mehr vorhanden sind und dadurch im Zwickel eine optimal starke Anpressung an die Umfangsflächen der Adern im Inneren des Zwickels erfolgt.

### BEZUGSZEICHENLISTE

- 1: Zwickel
- 2a, 2b, 2c, ...: Ader
- 3: Stern
- 3a, 3b: Frontplatte
- 4: Verbindungssteg
- 5: Füllung
- 6: Ummantelung
- 7: kurzer Fortsatz
- 8: langer Fortsatz
- 9: Abstand
- 10: Längsrichtung
- 11: Verdrängerstab
- 12: Verdrängerkamm
- 13: Dicke
- 14: Breite
- 15: Verbindungsbogen
- 16: Riffelung
- 17: Haltestab
- 18: Überstand
- 19a, 19b: Einschubebene
- 20: Dichtmasse
- 21: Dicke Stern
- 22: Breite Stern
- 23a: Oberschale Muffe
- 23b: Unterschale Muffe
- 24: Breite

## Patentansprüche

1. Verfahren zum Abdichten der Außenfläche mehrerer etwa parallel verlaufender Körper, insbesondere der Adern (2) von elektrischen Kabeln, in deren mittigem Freiraum (Zwickel 1) wenigstens gegeneinander,
**dadurch gekennzeichnet, daß**
- in den Zwickel (1) eine verformbare Dichtmasse eingebracht wird,
- Ausdehnungsbegrenzungen für die Dichtmasse in axialer und radialer Richtung angeordnet werden, und
- wenigstens ein Verdrängerkörper in die Dichtmasse eingebracht wird, um deren dichte Anlage an den Außenflächen der Körper, insbesondere Ader (11), zu bewirken.

2. Verfahren nach Anspruch 1,
**dadurch gekennzeichnet, daß**
wenigstens die axialen Ausdehnungsbegrenzungen zusammen mit der Dichtmasse und insbesondere vor den radialen Ausdehnungsbegrenzungen in den Zwickel eingebracht werden.

3. Verfahren nach einem der vorhergehenden Ansprüche,
**dadurch gekennzeichnet, daß**
der Verdrängerkörper radial von außen in den Zwickel eingebracht wird.

4. Verfahren nach einem der vorhergehenden Ansprüche,
**dadurch gekennzeichnet, daß**
die Verdrängerkörper zusammen mit den radialen Ausdehnungsbegrenzungen eingebracht werden.

5. Zwickeldichtung zum Abdichten der Außenflächen mehrerer parallel verlaufender Körper, insbesondere der Adern (2a, 2b, 2c, 2d, ...) von einem elektrischen Kabel, wenigstens gegeneinander, insbesondere auch gegenüber der Umgebung, wenigstens in deren mittigen Freiraum (Zwickel 1), insbesondere zur Durchführung des Verfahrens nach Anspruch 1 bis 4,
**gekennzeichnet durch**
- wenigstens einen radial zur Längsrichtung (10) der Adern (2) in den Zwickel (1) einbringbaren Stern (3),
- wobei jeder Stern (3) als mittlere Schicht eine Füllung (5) aus verformbarer Dichtmasse und zwei beidseits, in axialer Richtung die Dichtmasse (5) begrenzenden, Frontplatten (3a, 3b) besteht, welche in ihrem gegenseitigen Abstand (9) zueinander begrenzt sind, und
- wenigstens einem Verdrängerkörper, dessen Dicke (13) maximal dem lichten Abstand (9) zwischen den beiden Frontplatten (3a, 3b) entspricht und dessen Breite (14) maximal der Breite eines Fortsatzes (7, 8) des Sternes (3) entspricht.

6. Zwickeldichtung nach Anspruch 5,
**dadurch gekennzeichnet, daß**
das im Zwickel abzudichtende Kabel vier Adern (2a, 2b, 2c, 2d) aufweist und der Stern (3) kreuzförmig gestaltet ist mit zwei diametral voneinander wegweisenden kurzen Fortsätzen (7) und hierzu im rechten Winkel abstrebenden, zwei diametral gegenüberliegenden langen Fortsätzen (8).

7. Zwickeldichtung nach Anspruch 5 oder 6,
**dadurch gekennzeichnet, daß**
das im Zwickel abzudichtende Kabel drei Adern (2a, 2b, 2c) aufweist und der Stern ein dreiarmiger Stern mit zwei langen Fortsätzen (8) und einem kurzen Fortsatz (7) sowie gleichem Zwischenwinkel zwischen den Fortsätzen ist.

8. Zwickeldichtung nach Anspruch 5 bis 7,
**dadurch gekennzeichnet, daß**
die Dicke des Sternes deutlich geringer ist als die Breite, gemessen von dem Ende des einen kurzen Fortsatzes (7a) zum Ende des anderen kurzen Fortsatzes (7b).

9. Zwickeldichtung nach einem der Ansprüche 5 bis 8,
**dadurch gekennzeichnet, daß**
die Zwickeldichtung mehrere in Längsrichtung (10) hintereinander angeordnete Sterne (3) aufweist, wobei die langen Fortsätze (8a, 8b, ...) fluchtend hinter den kurzen Fortsätzen (7a, 7b) der axial benachbarten Sterne (3) liegen und umgekehrt.

10. Zwickeldichtung nach einem der Ansprüche 5 bis 9,
**dadurch gekennzeichnet, daß**
mehrere axial hintereinander liegende Verdrängerkörper, insbesondere Verdrängerstäbe (11) zu einem einstückigen Verdrängerkamm (12) zusammengefaßt und axial so zueinander beabstandet sind, daß jeder Verdrängerstab (11) zwischen die beiden Frontplatten (3a, 3b) eines Sternes (3) eindringen kann.

11. Zwickeldichtung nach einem der Ansprüche 5 bis 10,
**dadurch gekennzeichnet, daß**
der Verdrängerkamm (12) an seinen axialen Stirnseiten zusätzliche Haltestäbe (17) aufweist, die axial außerhalb des ersten und letzten Sternes (3) der Zwickeldichtung im radial eingeschobenen Zustand des Verdrängerkammes (12) zu liegen kommen.

12. Zwickeldichtung nach einem der Ansprüche 5 bis 11,
**dadurch gekennzeichnet, daß**
die Adern (2a, 2b, 2c, ...) eine Querschnittsform etwa entsprechend einem Kreisquadranten aufweisen und der Verbindungsbogen (15) des Verdrängerkamms (12) eine pilzförmige Querschnittskontur aufweist, dessen beidseitige Überstände (18) im Querschnitt betrachtet die beiden benachbarten Adern (2a, 2b) eines mehradrigen Kabels übergreifen.

13. Zwickeldichtung nach einem der Ansprüche 5 bis 12,
**dadurch gekennzeichnet, daß**
radial von außen zwischen je zwei benachbarte Adern (2a, 2b) bzw. (2b, 2c) bzw. (2c, 2d) ... jeweils ein Verdrängerkamm (12) radial von außen eingeschoben wird.

14. Zwickeldichtung nach einem der Ansprüche 5 bis 13,
**dadurch gekennzeichnet, daß**
die Zwickeldichtung an ihrem Außenumfang und über die Außenkontur der Adern (2a, 2b, 2c) hinweg mit einer plastischen oder elastischen Dichtmasse (20) umlaufend benetzbar und zwischen Ober- und Unterschale (23a, 23b) eines Muffengehäuses (23) oder eines Klemmringes einlegbar ist.
